# EUROPÄISCHE PATENTSCHRIFT

(11) **EP 3 210 929 B1**
(45) Veröffentlichungstag und Bekanntmachung des Hinweises auf die Patenterteilung: **23.11.2022**
(21) Anmeldenummer: 17156523.7
(22) Anmeldetag: 16.02.2017
(51) Int. Cl.: B66C 1/34, F16G 15/00, B66C 1/10

(54) **LASTAUFNEHMENDES BAUTEIL DER ANSCHLAG-, ZURR- UND/ODER HEBETECHNIK MIT EINEM KUNSTSTOFF-METALL-VERBUNDSYSTEM**
LOAD-BEARING COMPONENT FOR STOPPING, LASHING AND/OR HOISTING TECHNOLOGY WITH A PLASTIC-METAL COMPOSITE SYSTEM
ÉLÉMENT STRUCTURAL DE RÉCEPTION DE CHARGE DE LA TECHNIQUE DE LEVAGE ET/OU D'ARRIMAGE ET/OU DE FIXATION COMPRENANT UN SYSTÈME COMPOSITE MÉTAL/PLASTIQUE

(30) Priorität: 23.02.2016 DE 102016202782
(43) Veröffentlichungstag der Anmeldung: 30.08.2017
(73) Patentinhaber: RUD Ketten Rieger & Dietz GmbH u. Co. KG, 73432 Aalen (DE)
(72) Erfinder: Pautsch, Ingo, 73441 Bopfingen-Oberdorf (DE); Spitzer, Sebastian, 01159 Dresden (DE); Dehmel, Felix, 01099 Dresden (DE)
(74) Vertreter: Grünecker Patent- und Rechtsanwälte PartG mbB

(56) Entgegenhaltungen:
- EP-A1- 2 039 959
- WO-A2-2004/106772
- DE-A1-102008 013 203
- DE-A1-102014 200 153
- DE-B- 1 258 056

## Beschreibung

Die Erfindung betrifft ein lastaufnehmendes Bauteil der Anschlag-, Zurr- und/oder Hebetechnik, mit einem Kunststoff-Metall-Verbundsystem, das wenigstens einen Lastaufnahmeabschnitt zum Anschlagen und/oder Einhängen einer Last und wenigstens einen Anschlussabschnitt zur Anbringung des Bauteils an einem weiteren Gegenstand ausbildet.

Ein solches lastaufnehmendes Bauteil kann in Form eines Schäkels, Rings, Hakens oder in Form eines Kettengliedes, Ringgliedes oder einer Öse ausgebildet sein.

Aus dem Stand der Technik ist aus der DE 20 2014 104 023 U1 ein Lastaufnahmehaken mit einem Kunststoff-Metall-Verbundsystem bekannt. Der Lastaufnahmehaken weist einen Innenkörper aus einem metallischen Werkstoff auf, der mit einem Kunststoffwerkstoff zumindest bereichsweise ummantelt ist. Der Innenkörper ist dabei ein flacher, aus einer Platine ausgeschnittener Fachwerkkörper, der mit einem die Fachwerkstruktur durchgreifenden Kunststoffkörper gekoppelt ist.

Obwohl sich mit einem derartigen Lastaufnahmehaken bereits ein verringertes Eigengewicht gegenüber herkömmlichen Lastaufnahmehaken aus Stahl ergibt, so ist es erstrebenswert, die Bauteilmasse bei unveränderter Tragfähigkeit weiter zu reduzieren.

Auch in der DE 12 58 056 B ist ein Haken gezeigt, der aufgrund der Materialkombination von Einzelelementen aus metallischem Material und einem Verbinder ein verringertes Eigengewicht ermöglicht, allerdings bei leicht verringerter Tragfähigkeit. Die EP 2 039 959 A1 zeigt ein Kettenglied, welches eine Faser in einer umlaufenden Naht aufnimmt, um eine hohe Zugfestigkeit zu erreichen.

In der DE 10 2008 013 203 A1 ist ein mit einem Ausleger-Hohlprofil ausgestatteter Ausleger gezeigt, der einen Faser-Kunststoff-Verbund als Verstärkungslage nutzt. Die DE 10 2014 200 153 A1 zeigt eine Zugstange aus faserverstärktem Kunststoff und in der WO 2004/106772 A2 sind ein Verbindungssystem und ein Verfahren zum Verbinden eines fadenförmigen Elements mit einem Verbindungselement gezeigt. DE 10 2014 200153 A1 offenbart den Oberbegriff des Anspruchs 1.

Diese Aufgabe wird durch das eingangs genannte Bauteil dadurch gelöst, dass das Kunststoff-Metall-Verbundsystem einen sich vom Lastaufnahmeabschnitt zum Anschlussabschnitt durchgängig erstreckenden, eine Tragestruktur bildenden Kern aus einem Faser-Kunststoff-Verbund und wenigstens eine sich am Lastaufnahmeabschnitt und/oder Anschlussabschnitt befindliche Außenschale aus einem Metallwerkstoff aufweist, und dass im Kern des Kunststoff-Metall-Verbundsystems wenigstens ein konus- oder keilförmig ausgestaltetes faserrichtungsweisendes Element eingebettet ist.

Die erfindungsgemäßen Bauteile zeichnen durch ein besonders geringes Gewicht und eine auf das Gewicht bezogen hohe Tragfähigkeit aus. Der Kern leitet als Tragstruktur die Kräfte vom Lastaufnahmeabschnitt zum Anschlussabschnitt. Die Außenschale am Lastaufnahmeabschnitt und/oder Anschlussabschnitt aus einem Metallwerkstoff verhindert, dass beim Einleiten einer Kraft vom Anschlagmittel in das Bauteil und/oder beim Einleiten der Kraft in den weiteren Gegenstand eine zu hohe Flächenpressung entsteht. Die Außenschale verteilt die Kraft auf eine größere Fläche, über die sie dann in den Kern geleitet wird.

Die erfindungsgemäße Lösung kann durch die folgenden jeweils für sich vorteilhaften und beliebig miteinander kombinierbaren Weiterbildungen nochmals verbessert werden.

So kann, um das Gewicht des Bauteils weiter zu verringern, der Kern an den nicht von der wenigstens einen Außenschale abgedeckten Bereichen die Oberfläche des Bauteils bilden. Alternativ kann auch eine Außenhülle aus einem vom Kern unterschiedlichen Kunststoffmaterial an den von der metallischen Außenschale nicht abgedeckten Bereichen des Bauteils vorhanden sein. Eine solche Außenhülle ist bevorzugt ebenfalls Teil des Faser-Kunststoff-Verbundes. Die Außenhülle kann beispielsweise aus einem hoch elastischen, stoßabsorbierenden Material bestehen und beispielsweise eine Gummiarmierung bilden. Die Außenhülle kann alternativ oder kumulativ zumindest bereichsweise auch aus Materialen mit besonderen Korrosionsbeständigkeiten bestehen, wenn das Bauteil in korrosiven Umgebungen verwendet wird.

Das faserrichtungsweisende Element dient dazu, während des Herstellvorgangs die vorgesehene Faserausrichtung, die Position des Preforms, oder die Lagenstabilisierung von vorimprägnierten Fasergelegen, sogenannten Prepregs, sicher zu stellen und somit eine für den Belastungsfall optimale Faserausrichtung zu erreichen. Die faserrichtungsweisenden Elemente können dabei insbesondere in ihrer Außenkontur dem Spannungsverlauf im Kern folgen. In der Umgebung des faserrichtungsweisenden Elements sind die Fasern insbesondere tangential zu dessen Oberfläche ausgerichtet.

Das faserrichtungsweisende Element befindet sich bevorzugt dort, wo die Materialstärke des Kerns gegenüber angrenzenden Bereichen des Kerns vergrößert ist oder wo eine Schlaufenanbindung des Faser-Kunststoff-Verbundes an ein metallisches Lastaufnahmeelement vorgesehen ist. An diesen verdickten Stellen besteht bei der Fertigung Gefahr, dass die vorgesehene Faserausrichtung undefiniert ist, was zu einer Wirrlage der Fasern und damit zu einer nur unvollständigen Ausnutzung der Faserfestigkeit führen könnte.

Insbesondere kann das faserrichtungsweisende Element sich im Kern von einem zylindrischen Durchbruch des Bauteils weg erstrecken. Bei einer solchen Ausgestaltung ist es von Vorteil, wenn die Basis eines keilförmigen Elements am zylindrischen Durchbruch angeordnet ist und die Spitze des keilförmigen Elements vom zylindrischen Durchbruch weg weist. Ein solcher zylindrischer Durchbruch kann beispielsweise eine Durchgangsöffnung des Lastaufnahmeabschnittes und/oder Anschlussabschnittes sein. An dieser Stelle kann das faserrichtungsweisende Element für eine definierte Fließrichtung und Faserausrichtung um das zylindrische Element herum sorgen und somit eine homogen gekrümmte Schlaufenanbindung gewährleisten.

Gemäß einer weiteren vorteilhaften Ausgestaltung kann die Außenschale einen zylindrischen Durchbruch des Bauteils wenigstens abschnittsweise auskleiden. Dadurch kann die Innenwandung des zylindrischen Durchbruches durch einen darin angeordneten Gegenstand belastet werden, ohne dass der Faser-Kunststoff-Verbund des Kerns beschädigt wird.

Eine solche Außenschale kann beispielsweise einen Flanschabschnitt um den zylindrischen Durchbruch herum bilden, der unempfindlicher gegen hohe Flächenpressungen ist.

Im Kern können Elektronikkomponenten integriert sein. Insbesondere können diese Elektronickomponenten umspritzt oder aninfiltriert sein, d.h. sie werden bei der Aushärtung der Faser-Kunststoff-Verbundes fest in den Kern eingeschlossen. Die Elektronikkomponenten können Datenübertragungseinrichtungen, Sensoren beispielsweise für die Erfassung wenigstens eines Betriebsparameters wie einen Lastzustand, die Temperatur und/oder zur Erfassung eines Betriebszustandes, wie beispielsweise das Schließen eines Hakens, Karabiners oder Schäkels. Die Elektronikkomponenten können auch berührungslos auslesbare Speicher umfassen, mit denen derartige Betriebsparameter und/oder -zustände sowie Parameter zur Bauteilkennung und/oder deren Wartung bevorzugt aktualisierbar abgelegt sind. Da die Elektronikkomponenten beim Aushärten des Faser-Kunststoff-Verbundes fest im Kern eingeschlossen werden, sind Sie später von außerhalb des Bauteiles nicht zugänglich. Dies kann Manipulationen der Elektronickomponenten verhindern.

Der Lastaufnahmeabschnitt kann bügelförmig ausgestaltet sein, wobei eine Innenfläche des Lastaufnahmeabschnittes von der Außenschale gebildet wird. Ein bügelförmiger Lastaufnahmeabschnitt findet sich beispielsweise bei Schäkeln, Karabinern, Haken, Ketten- oder Ringgliedern sowie Ösen. An der Innenfläche liegt ein Verbindungsglied oder ein biegeschlaffes Anschlag-, Hebe- oder Zurrmittel wie beispielsweise ein Seil oder ein Gurt auf. Die Außenschale an der Innenfläche soll den Verschleiß der Innenfläche verringern und die Kraft über eine größere Fläche auf den Kern verteilen.

Damit das Anschlag-, Hebe- oder Zurrmittel sich entlang des Lastaufnahmeabschnitts bewegen kann, um unterschiedlichen Kraftrichtungen zu folgen, ist von Vorteil, wenn sich die Außenschale in Längsrichtung des bügelförmigen Lastaufnahmeabschnittes um mehr als einen Halbkreisbogen, also um mehr als 180° erstreckt.

Ein besonders tragfähiges Bauteil ergibt sich, wenn der Faser-Kunststoff-Verbund Endlosfasern aufweist. Die Endlosfasern können insbesondere um einen zylindrischen Durchbruch oder mehrere Durchbrüche des Bauteils geschlungen sein. Der wenigstens eine umschlungene Durchbruch befindet sich bei einer solchen Ausgestaltung innerhalb des von der Endlosfaser umschlossenen Bereichs. Die Durchbrüche können Teil des Lastaufnahmeabschnitts, beispielsweise bei Ringgliedern, Kettengliedern oder Ösen sowie Anschlagpunkten mit Ösen sein. Am Anschlussabschnitt können derartige Durchbrüche beispielsweise dazu dienen, einen Trag- oder Schließbolzen oder eine Schließe oder Falle aufzunehmen.

Im Folgenden ist die Erfindung anhand von Ausführungsbeispielen mit Bezug auf die Zeichnungen exemplarisch erläutert. Nach Maßgabe der obigen Ausführungen können dabei einzelne Elemente des jeweiligen Ausführungsbeispiels weggelassen oder dem jeweiligen Ausführungsbeispiel hinzugefügt werden, je nachdem ob es für eine bestimmte Anwendung dieses Elementes bedarf. In den Figuren werden für Elemente, die einander hinsichtlich Funktion und/oder Aufbau entsprechen, der Einfachheit halber stets dieselben Bezugszeichen verwendet.

Es zeigen:
- Fig. 1: eine schematische Seitenansicht eines erfindungsgemäßen Bauteils;
- Fig. 2: eine schematische Perspektivansicht auf das teilweise freigeschnittene Bauteil der Fig. 1;
- Fig. 3: eine schematische Seitenansicht eines weiteren erfindungsgemäßen Bauteils;
- Fig. 4: eine schematische Frontansicht des Bauteils der Fig. 3;
- Fig. 5: eine schematische Perspektivansicht des teilweise freigeschnittenen Bauteils der Fig. 3 und 4;
- Fig. 6: eine schematische Seitenansicht eines weiteren erfindungsgemäßen Bauteils;
- Fig. 7: eine schematische Seitenansicht eines weiteren erfindungsgemäßen Bauteils.

Zunächst werden Funktion und Aufbau des erfindungsgemäßen Bauteils 1 der Anschlag-, Zurr- und/oder Hebetechnik zur Lastaufnahme beschrieben. Das lastaufnehmende Bauteil 1 kann ein Schäkel, ein Haken, ein Ringglied, ein Kettenglied, ein Anschlagpunkt, eine Spannvorrichtung für Gurte, Seile oder Ketten oder ein Karabiner sein, um nur einige Bauteile der Anschlag-, Zurr- und/oder Hebetechnik zu nennen.

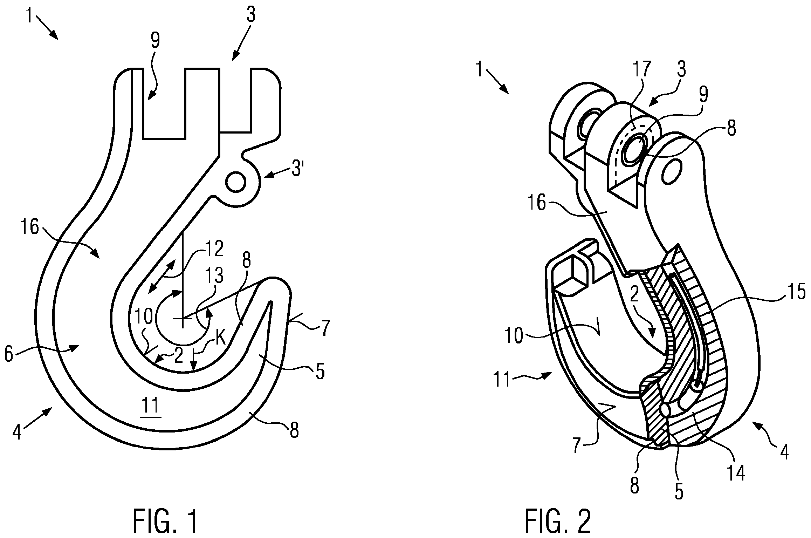

In den Fig. 1 und 2 ist das Bauteil lediglich beispielhaft als Haken dargestellt.

Das Bauteil 1 weist einen Lastaufnahmeabschnitt 2, an dem eine Last mittels eines Anschlagmittels (nicht gezeigt) angeschlagen und/oder eingehängt wird.

Das Bauteil 1 weist ferner einen Anschlussabschnitt 3 auf, der zur Anbringung des Bauteils an einem weiteren Gegenstand dient.

Das Bauteil 1 kann mehrere Lastaufnahmeabschnitte 2 sowie mehrere Anschlussabschnitte 3 aufweisen. Es kann beispielsweise als Haken einen weiteren Anschlussabschnitt 3' zur Anbringung einer Hakenfalle bzw. eines Verschlusses für das Hakenmaul aufweisen.

Das Bauteil weist ein Kunststoff-Metall-Verbundsystem 4 auf. In diesem Verbundsystem sind wenigstens ein Kunststoff- und wenigstens ein Metallelement kombiniert und gemeinsam verarbeitet, um Eigenschaften zu erreichen, die die einzelnen Komponenten des Verbundsystems jeweils für sich betrachtet nicht haben.

Das Kunststoff-Metall-Verbundsystem 4 weist einen Kern 5 auf, der teilweise die Außenfläche des Bauteils 1 bilden kann. Der Kern ist selbst aus einem Faser-Kunststoff-Verbund gefertigt und bildet eine Tragestruktur 6, welche eine auf den Lastaufnahmeabschnitt 2 wirkende Kraft 7 zum Anschlussabschnitt 3 leitet. Vom Anschlussabschnitt 3 wird sie in den dort angebrachten Gegenstand eingeleitet. Die Richtung des Kraftflusses kann sich auch verändern.

Der Kern 5 bildet wenigstens bereichsweise eine Außenfläche 7 des Bauteils 1. Um den Kern 5 zu schützen, kann er außen mit einem stoßabsorbierenden Material beschichtet sein, das sich vom Material des Kerns unterscheidet. Diese Außenhülle (nicht gezeigt) kann Teil des Faser-Kunststoff-Verbunds sein. So kann beispielsweise der Kern außen mit einer elastischen gummiartigen Hülle wenigstens abschnittsweise umgeben sein, damit Stöße das Bauteil 1 bzw. den Kern 5 nicht beschädigen können. Die Verwendung des Bauteils 1 in bestimmten korrosiven Umgebungen kann es ferner notwendig machen, den Kern 5 mit einer Schutzschicht aus einem gegenüber dieser Umgebung korrosionsbeständigen Schicht zu überziehen. Eine solche Schicht kann Teil des Faser-Kunststoff-Verbunds sein.

Das Kunststoff-Metall-Verbundsystem 4 weist ferner wenigstens eine Außenschale 8 auf, die sich wenigstens am Lastaufnahmeabschnitt 2 und/oder am Anschlussabschnitt 3 befindet und dort die Außenfläche 7 des Bauteils 1 bildet. Die Außenschale 8 ist aus einem Metallwerkstoff gefertigt.

Der Lastaufnahmeabschnitt 2 und/oder der Anschlussabschnitt 3 können wenigstens einen zylindrischen Durchbruch 9 aufweisen, der von der Außenschale 8 zumindest abschnittsweise ausgekleidet ist.

Die Außenschale 8 dient dazu, eine von außen auf das Bauteil 1 wirkende Kraft 7 aufzunehmen und über eine größere Fläche an den Kern 5 weiterzuleiten. Gleichzeitig soll die Außenschale 8 eine größere Verschleißfestigkeit gegen Stoß und Abrieb bewirken.

Wenn, wie bei einem Haken, der Lastaufnahmeabschnitt 2 in etwa bügelförmig ausgestaltet ist, kann die Außenschale 8 wenigstens bereichsweise die Innenfläche 10 des Lastaufnahmeabschnittes bilden.

Dabei kann sich die Außenschale 8 wenigstens abschnittsweise über die sich an die Innenfläche anschließenden Seitenflächen 11 des Bauteils 1 erstrecken. Um den Kern 5 an dieser Stelle besser zu schützen, kann dieser bezüglich der Außenschale 8 beispielsweise durch eine Kehlung etwas zurückspringen, so dass ein am Lastaufnahmeabschnitt 2 eingehängtes Anschlagmittel den Kern nicht berühren kann.

An der Innenfläche 10 des Lastaufnahmeabschnittes 2 kann sich die Außenschale 8 in dessen Längsrichtung 12 über einen Bereich 13 erstrecken, der mehr als einen Halbkreisbogen, also über 180° einnimmt.

In dem weggebrochen dargestellten Bereich 14 der Fig. 2, der den Blick auf das Innere des Kerns 5 freigibt, ist zu erkennen, dass im Kern 5 Elektronikkomponenten 15 eingebettet sein können. Diese Elektronikkomponenten können RFID-Elemente, Sensoren, Speicher und Ähnliches umfassen, um Betriebszustände des Sensors aufzuzeichnen und fernabfragen zu können. Außerdem können Kennungen, die das Bauteil und dessen Wartungszustand identifizieren, ebenfalls in den Elektronikkomponenten integriert sein.

Der Faser-Kunststoff-Verbund 16 des Kerns 5 weist bevorzugt Endlosfasern auf, die in Fig. 2 lediglich anhand einer einzelnen Endlosfaser 17 schematisch dargestellt sind. Wenigstens ein Teil der Endlosfasern 17 umschlingt einen zylindrischen Durchbruch 9 des Bauteils 1, um die Tragfähigkeit zu erhöhen.

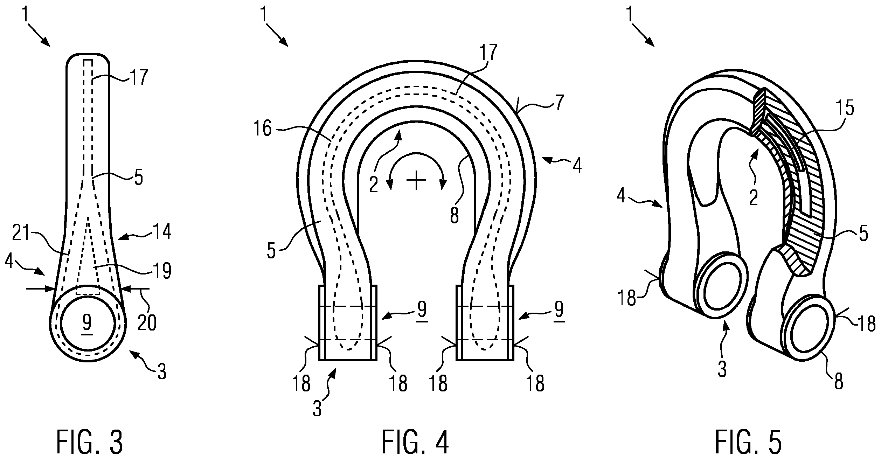

Wie die Fig. 3 bis 5 zeigen, kann das Bauteil 1, wie es oben beschrieben ist, auch als Schäkel ausgestaltet sein. Der Anschlussabschnitt 3 nimmt beim Schäkel den Schließbolzen (nicht gezeigt) als weiteren Gegenstand auf. Die zylindrischen Durchbrüche 9 sind mit jeweils einer separaten Außenschale 8 innen ausgekleidet, die zudem an den Stirnseiten der zylindrischen Durchbrüche 9 einen Flanschabschnitt 18 bilden, um Beschädigungen des Kerns 5 aufgrund großer Flächenpressung zu vermeiden.

In dem weggebrochen dargestellten Bereich 14 der Fig. 3 ist zu erkennen, dass in dem Kern 5 auch wenigstens ein faserrichtungsweisendes Element 19 eingebettet sein kann. Das faserrichtungsweisende Element 19 befindet sich bevorzugt in einem Bereich 20, in dem die Materialstärke 21 des Kerns gegenüber angrenzenden Bereichen stark erhöht ist. In einem solchen verdickten Bereich 20 besteht bei der Fertigung des Faser-Kunststoff-Verbundes 16 bzw. des gesamten Kunststoff-Metall-Verbundsystems 4 die Gefahr, dass die Fließrichtung des Kunststoffes mit den Fasern unbestimmt ist. Dies kann zu einer Wirrlage der Fasern führen, durch die die Tragfähigkeit des Faser-Kunststoff-Verbundes nicht optimal ausgenutzt werden kann. Um bei der Fertigung die Faserrichtung 22 belastungsgerecht auszurichten, ist in wenigstens einem Bereich 20 mit erhöhter Materialstärke 21 das faserrichtungsweisende Element 19 angeordnet. Ein solcher Bereich 20 befindet sich beispielsweise an einem bzw. angrenzend an ein Loch 9.

Das faserrichtungsweisende Element 19 kann konus- oder keilförmig sein, wobei es sich von dem Bereich 20 mit der größeren Materialstärke 21 weg verjüngt. Die Basis eines solchen keilförmigen Elements 11 befindet sich bevorzugt an einem zylindrischen Durchbruch 9.

Bei der Verwendung von Endlosfasern 17 können diese bei einem bügelförmigen Lastaufnahmeabschnitt 2 oder Anschlussabschnitt 3 schlaufenförmig um die beiden zylindrischen Durchbrüche 9 gelegt werden, wie dies in den Fig. 3 und 4 angedeutet ist.

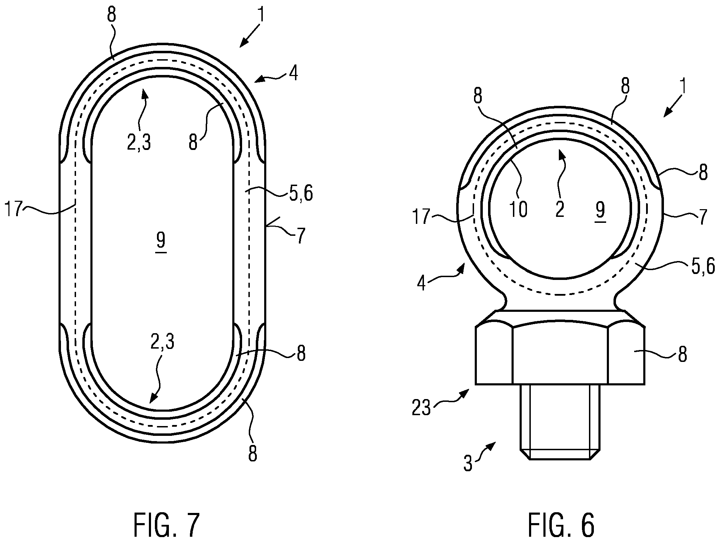

Das Bauteil 1 kann auch als Anschlagpunkt ausgestaltet sein, wie Fig. 6 zeigt. Die Außenschale 8 kann sich im Bereich des Anschlussabschnitt 3 befinden, mit dem der Anschlagpunkt an einem Gegenstand, beispielsweise einer zu hebenden Last befestigt wird. In diesem Fall weist der Lastaufnahmeabschnitt 2 einen zylindrischen Durchbruch 9 in Form einer Öse auf, durch die ein Anschlagmittel (nicht gezeigt) zum Heben der Last gefädelt werden muss. Die Innenfläche 10 des Lastaufnahmeabschnittes ist ebenfalls mit einer Außenschale 8 versehen.

An der Außenfläche 11 des Lastaufnahmeabschnittes 2 kann sich eine weitere Außenschale 8 befinden, um eine Beschädigung des Kerns 5 bei Stößen zu verhindern.

Die Außenschale 8 befindet sich zudem dort, wo mit Werkzeugen am Bauteil 1 hantiert wird, beispielsweise an einem einen Schraubenkopf 23 bildenden Abschnitt.

Wie schließlich Fig. 7 zeigt, kann das Bauteil 1 auch ein Ringglied sein, bei dem Lastaufnahmeabschnitt 2 und Anschlussabschnitt 3 identisch ausgestaltet sind.

### Bezugszeichen

- 1: lastaufnehmendes Bauteil der Anschlag-, Zurr- und/oder Hebetechnik
- 2: Lastaufnahmeabschnitt
- 3: Anschlussabschnitt
- 3': weiterer Anschlussabschnitt
- 4: Kunststoff-Metall-Verbundsystem
- 5: Kern
- 6: Tragestruktur
- 7: Außenfläche
- 8: Außenschale
- 9: Zylindrischer Durchbruch
- 10: Innenfläche
- 11: Seitenfläche
- 12: Längsrichtung
- 13: von Außenschale abgedeckter Bereich des Kerns
- 14: weggebrochen dargestellter Bereich
- 15: Elektronikkomponente
- 16: Faser-Kunststoff-Verbund
- 17: Endlosfaser
- 18: Flanschabschnitt
- 19: faserrichtungsweisendes Element
- 20: Bereich mit erhöhter Materialstärke
- 21: Materialstärke
- 22: Faserrichtung
- 23: Schraubenkopf

- K: Kraft

## Patentansprüche

1. Lastaufnehmendes Bauteil (1) der Anschlag-, Zurr- und/oder Hebetechnik zur Lastaufnahme, mit einem Kunststoff-Metall-Verbundsystem (4), das wenigstens einen Lastaufnahmeabschnitt (2) zum Anschlagen und/oder Einhängen einer Last und/oder eines Anschlagmittels und wenigstens einen Anschlussabschnitt (3) zur Anbringung eines Gegenstandes am Bauteil (1) ausbildet, wobei das Kunststoff-Metall-Verbundsystem (4) einen sich vom Lastaufnahmeabschnitt (2) zum Anschlussabschnitt (3) durchgängig erstreckenden, eine Tragestruktur (6) bildenden Kern (5) aus einem Faser-Kunststoff-Verbund (16) und wenigstens eine sich am Lastaufnahmeabschnitt (2) und/oder Anschlussabschnitt (3) befindliche Außenschale (8) aus einem Metallwerkstoff aufweist, **dadurch gekennzeichnet, dass** im Kern (5) des Kunststoff-Metall-Verbundsystems (4) wenigstens ein konus- oder keilförmig ausgestaltetes faserrichtungsweisendes Element (19) eingebettet ist.

2. Lastaufnehmendes Bauteil (1) nach Anspruch 1, **dadurch gekennzeichnet, dass** der Kern (5) an den nicht von der wenigstens einen Außenschale (8) abgedeckten Bereichen die Außenfläche (11) des Bauteils (1) bildet.

3. Lastaufnehmendes Bauteil (1) nach Anspruch 1 oder 2, **dadurch gekennzeichnet, dass** das faserrichtungsweisende Element (19) sich in einem Bereich (20) befindet, in dem die Materialstärke (21) des Faser-Kunststoff-Verbundes (16) gegenüber der Umgebung erhöht ist.

4. Lastaufnehmendes Bauteil (1) nach einem der Ansprüche 1 bis 3, **dadurch gekennzeichnet, dass** das faserrichtungsweisende Element (19) sich an einem Loch (9) des Bauteils (1) befindet.

5. Lastaufnehmendes Bauteil nach Anspruch 4, **dadurch gekennzeichnet, dass** das faserrichtungsweisende Element (19) sich vom Loch weg verjüngt.

6. Lastaufnehmendes Bauteil (1) nach einem der Ansprüche 1 bis 5, **dadurch gekennzeichnet, dass** die Außenschale (8) einen zylindrischen Durchbruch (9) des Bauteils (1) wenigstens abschnittsweise auskleidet.

7. Lastaufnehmendes Bauteil (1) nach einem der Ansprüche 1 bis 6, **dadurch gekennzeichnet, dass** im Kern (5) wenigstens eine Elektronikkomponente (15) eingebettet ist.

8. Lastaufnehmendes Bauteil (1) nach einem der Ansprüche 1 bis 7, **dadurch gekennzeichnet, dass** der Lastaufnahmeabschnitt (2) bügelförmig ausgestaltet ist und eine Innenfläche (10) des Lastaufnahmeabschnittes (2) von der Außenschale (8) gebildet ist.

9. Lastaufnehmendes Bauteil (1) nach Anspruch 8, **dadurch gekennzeichnet, dass** sich die Außenschale (8) wenigstens abschnittsweise über die sich an die Innenfläche (10) anschließenden Seitenflächen (11) des Lastaufnahmeabschnitt (2) erstreckt.

10. Lastaufnehmendes Bauteil (1) nach Anspruch 8 oder 9, **dadurch gekennzeichnet, dass** sich die Außenschale (8) in Längsrichtung (12) des Lastaufnahmeabschnittes (2) um mehr als 180° erstreckt.

11. Lastaufnehmendes Bauteil (1) nach einem der Ansprüche 1 bis 10, **dadurch gekennzeichnet, dass** die wenigstens eine Außenschale (8) an einem zylindrischen Durchbruch (9) eine Flanschfläche (18) bildet.

12. Lastaufnehmendes Bauteil (1) nach einem der Ansprüche 1 bis 11, **dadurch gekennzeichnet, dass** der Faser-Kunststoff-Verbund (16) Endlosfasern (17) aufweist.

13. Lastaufnehmendes Bauteil (1) nach Anspruch 12, **dadurch gekennzeichnet, dass** wenigstens einige der Endlosfasern (17) wenigstens einen zylindrischen Durchbruch (9) des Bauteils (1) umschlingen.

## Claims

1. Load-bearing component (1) for the fastening, lashing, and/or lifting technology for receiving loads, comprising a plastic-metal composite system (4) which forms at least one load-bearing section (2) for fastening and/or suspending a load and/or a fastening device and at least one connection section (3) for attaching an object to the component (1), wherein the plastic-metal composite system (4) comprises a core (5) of a fiber-plastic composite extending continuously from the load-bearing section (2) to the connection section (3) and forming a support structure (6), and at least one outer shell (8) of a metal material and disposed on the load-bearing section (2) and/or the connection section (3), **characterized in that** at least one element of tapered or wedged shape determining the fiber direction (19) is embedded in the core (5) of the plastic-metal composite system (4).

2. Load-bearing component (1) according to claim 1, **characterized in that** the core (5) forms the outer surface (11) of the component (1) at the sections that are not covered by the at least one outer shell (8).

3. Load-bearing component (1) according to claim 1 or 2, **characterized in that** the one element determining the fiber direction (19) is disposed in an area (20) in which the material thickness (21) of the fiber-plastic composite (16) is increased relative to the surroundings.

4. Load-bearing component (1) according to any one of claims 1 to 3, **characterized in that** the element determining the fiber direction (19) is disposed at a hole (9) of the component (1).

5. Load-bearing component (1) according to claim 4, **characterized in that** the element determining the fiber direction (19) tapers away from the hole.

6. Load-bearing component (1) according to any one of claims 1 to 5, **characterized in that** the outer shell (8) lines a cylindrical opening (9) of the component (1) at least in sections.

7. Load-bearing component (1) according to any one of claims 1 to 6, **characterized in that** at least one electronic component (15) is embedded in the core (5).

8. Load-bearing component (1) according to any one of claims 1 to 7, **characterized in that** the load-bearing section (2) is configured to be bow-shaped and an inner surface (10) of the load-bearing section (2) is formed by the outer shell (8).

9. Load-bearing component (1) according to claim 8, **characterized in that** the outer shell (8) extends at least in sections over the side surfaces (11) of the load-bearing section (2) that adjoin the inner surface (10).

10. Load-bearing component (1) according to claim 8 or 9, **characterized in that** the outer shell (8) extends more than 180° in the longitudinal direction (12) of the load-bearing section (2).

11. Load-bearing component (1) according to any one of claims 1 to 10, **characterized in that** the at least one outer shell (8) forms a flange surface (18) at a cylindrical opening (9).

12. Load-bearing component (1) according to any one of claims 1 to 11, **characterized in that** the fiber-plastic composite (16) comprises continuous fibers (17).

13. Load-bearing component (1) according to claim 12, **characterized in that** at least some of the continuous fibers (17) loop around at least one cylindrical opening (9) of the component (1).

## Revendications

1. Composant de réception de charge (1) de la technique d'accrochage et/ou d'arrimage et/ou de levage pour une réception de charge, avec un système composite métal/plastique (4) qui forme au moins une section de réception de charge (2) pour l'accrochage et/ou la suspension d'une charge et/ou un moyen de fixation et au moins une section de raccordement (3) pour la fixation d'un article sur le composant (1), le système composite métal/plastique (4) présentant un noyau (5) en composite fibre-plastique (16) qui s'étend de manière continue de la section de réception de charge (2) à la section de raccordement (3) et qui forme une structure de support (6), et au moins une coque extérieure (8) en matériau métallique qui se trouve sur la section de réception de charge (2) et/ou la section de raccordement (3),
**caractérisé en ce que**,
au moins un élément (19) orienté dans la direction des fibres de forme conique ou cunéiforme est incorporé dans le noyau (5) du système composite métal/plastique (4).

2. Composant de réception de charge (1) selon la revendication 1, **caractérisé en ce que** le noyau (5) forme la surface extérieure (11) du composant (1) au niveau des zones non recouvertes par la au moins une coque extérieure (8).

3. Composant de réception de charge (1) selon la revendication 1 ou 2, **caractérisé en ce que** l'élément (19) orienté dans la direction des fibres se trouve dans une zone (20) dans laquelle l'épaisseur de matériau (21) du composite fibre-plastique (16) est augmentée par rapport à l'environnement.

4. Composant de réception de charge (1) selon l'une des revendications 1 à 3, **caractérisé en ce que** l'élément (19) orienté dans la direction des fibres se trouve au niveau d'un trou (9) du composant (1).

5. Composant de réception de charge selon la revendication 4, **caractérisé en ce que** l'élément (19) orienté dans la direction des fibres se rétrécit en s'éloignant du trou.

6. Composant de réception de charge (1) selon l'une des revendications 1 à 5, **caractérisé en ce que** la coque extérieure (8) recouvre au moins partiellement une ouverture traversante cylindrique (9) du composant (1).

7. Composant de réception de charge (1) selon l'une des revendications 1 à 6, **caractérisé en ce qu'**au moins un composant électronique (15) est incorporé dans le noyau (5).

8. Composant de réception de charge (1) selon l'une des revendications 1 à 7, **caractérisé en ce que** la section de réception de charge (2) est conçue en forme d'étrier et une surface intérieure (10) de la section de réception de charge (2) est formée par la coque extérieure (8).

9. Composant de réception de charge (1) selon la revendication 8, **caractérisé en ce que** la coque extérieure (8) s'étend au moins partiellement sur les surfaces latérales (11) de la section de réception de charge (2) adjacentes à la surface intérieure (10).

10. Composant de réception de charge (1) selon la revendication 8 ou 9, **caractérisé en ce que** la coque extérieure (8) s'étend dans la direction longitudinale (12) de la section de réception de charge (2) sur plus de 180°.

11. Composant de réception de charge (1) selon l'une quelconque des revendications 1 à 10, **caractérisé en ce qu'**au moins une coque extérieure (8) forme une surface de bride (18) au niveau d'une ouverture traversante cylindrique (9).

12. Composant de réception de charge (1) selon l'une des revendications 1 à 11, **caractérisé en ce que** le composite fibre-plastique (16) présente des fibres continues (17).

13. Composant de réception de charge (1) selon la revendication 12, **caractérisé en ce qu'**au moins certaines des fibres continues (17) enveloppent au moins une ouverture cylindrique (9) du composant (1).
